(19) Europäisches Patentamt
European Patent Office
Office européen des brevets

(11) **EP 1 762 820 A1**

(12) **EUROPÄISCHE PATENTANMELDUNG**

(43) Veröffentlichungstag:
**14.03.2007 Patentblatt 2007/11**

(51) Int Cl.:
***G01B 11/24*** *(2006.01)*

(21) Anmeldenummer: **05108231.1**

(22) Anmeldetag: **08.09.2005**

| | |
|---|---|
| (84) Benannte Vertragsstaaten:<br>**AT BE BG CH CY CZ DE DK EE ES FI FR GB GR HU IE IS IT LI LT LU LV MC NL PL PT RO SE SI SK TR**<br>Benannte Erstreckungsstaaten:<br>**AL BA HR MK YU**<br><br>(71) Anmelder: **Klingelnberg GmbH**<br>**42499 Hückeswagen (DE)** | (72) Erfinder:<br>• **Mies, Georg**<br>  **51688, Wipperfürth (DE)**<br>• **Häger, Jan**<br>  **42499, Hückeswagen (DE)**<br><br>(74) Vertreter: **OK pat AG**<br>**Chamerstrasse 50**<br>**6300 Zug (CH)** |

(54) **Vorrichtung und Verfahren zum Ermitteln des Profilverlaufs eines gekrümmten Elements**

(57)  Vorrichtung (10) zum Ermitteln des Profilverlaufes (2) eines gekrümmten Elements (1), mit mindestens zwei mechanischen Antastpunkten (P1, P3), einem Wegmesssystem (13), um eine Kurvenlänge zu ermitteln, die entlang des Profilverlaufes (2) verfahren wurde, einem Abstandssensor (14), und einem Fördermittel (15, 16, 17), um eine Relativbewegung des gekrümmten Elements (1) entlang der beiden Antastpunkte (11, 12) und des Abstandssensors (14) auszuführen. Die Position der Antastpunkte (11, 12) und des Abstandssensors (14) sind bekannt, und das Wegmesssystem (13) sowie der Abstandssensor (14) sind schaltungstechnisch mit einer Auswerteeinheit (30) verbunden, um beim Ausführen der Relativbewegung eine Reihe von diskreten Werten aufzunehmen, die den Profilverlauf (2) charakterisieren.

Fig. 1

**Beschreibung**

Die Erfindung betrifft Vorrichtungen, die eingesetzt werden, um das Profil von gekrümmten Elementen, insbesondere von Biegeteilen zu ermitteln. Außerdem betrifft die Erfindung ein entsprechendes Verfahren.

HINTERGRUND DER ERFINDUNG

Es gibt mittlerweile zahlreiche (Zwischen-)Produkte, die durch automatisierte Biege- und Richtmaschinen bearbeitet werden. Dazu zählen hauptsächlich Drähte, Vollmaterial, Stabstähle, (Winkel-)Profile, Rohre, und Bleche. Im Zusammenhang mit der vorliegenden Beschreibung werden diese Zwischen- oder Endprodukte als Biegeteile bezeichnet. Solche Biegeteile können in den unterschiedlichsten Formen und Größen produziert werden.

Außerdem gibt es zahlreiche andere Elemente, die gekrümmt sind oder gekrümmte Oberflächen aufweisen. Dabei kann es sich zum Beispiel um maschinell oder manuell gefertigte Elemente handeln. Als Synonym für all diese Elemente, einschließlich der genannten Biegeteile, wird im Folgenden der Begriff "gekrümmte Elemente" verwendet.

Für eine sichere Prozessführung müssen sowohl die einzelnen Prozessschritte bei der Herstellung oder Bearbeitung als auch die Qualität der hergestellten gekrümmten Elemente laufend überwacht und geprüft werden.

Es besteht daher der Bedarf die gekrümmten Elemente nach oder auch während der Bearbeitung zu vermessen, um zum Beispiel die Einhaltung vorgegebener Toleranzen bestimmen zu können, oder um korrigierend in einen Bearbeitungsschritt eingreifen zu können. Besonders wichtig ist eine solche Überwachung während oder nach dem automatisierten Biegen- und Richten von Biegeteilen.

Ein Ansatz, der sich als besonders aufwendig darstellt, ist das Vermessen eines gekrümmten Elements mittels eines Koordinaten-Messgeräts, das einen oder mehrere Sensoren aufweist, um das Profil Punkt für Punkt abzutasten und zu erfassen. Es ist auch möglich eine CCD Kamera einzusetzen, um ein Profil digital aufzuzeichnen und rechnerisch auszuwerten. Auch dieser Ansatz ist relativ aufwendig.

Es ist eine Aufgabe der Erfindung eine Messvorrichtung bereit zu stellen, die universell einsetzbar und je nach Bedarf zum Vermessen verschiedener gekrümmter Elemente dienen kann.

Es ist eine weitere Aufgabe der Erfindung eine Messvorrichtung bereit zu stellen, die automatisiert werden kann.

Die Aufgabe wird durch eine Vorrichtung gemäss Anspruch 1 und ein Verfahren gemäss Anspruch 16 gelöst.

Gemäss Erfindung wird eine Vorrichtung zum Ermitteln des Profilverlaufes eines gekrümmten Elements bereit gestellt, die mindestens drei Antastpunkte, ein Wegmesssystem, mindestens einem ersten Abstandssensor, und ein Fördermittel umfasst. Die Fördermittel sind so ausgelegt, dass eine Relativbewegung des gekrümmten Elements entlang der beiden Antastpunkte und des Abstandssensors ausgeführt wird. Die Antastpunkte stehen so zu einander in Bezug, und das Wegmesssystem sowie der Abstandssensor sind so schaltungstechnisch mit einer Auswerteeinheit verbunden, dass beim Ausführen der Relativbewegung eine Reihe von diskreten Werten aufgenommen werden kann, die den Profilverlauf charakterisieren.

Gemäss einer weiteren Ausführungsform der Erfindung wird eine Vorrichtung zum Ermitteln des Profilverlaufes eines gekrümmten Elements bereit gestellt, die mindestens zwei mechanische Antastpunkte, ein Wegmesssystem, einen Abstandssensor und Fördermittel umfasst. Die Fördermittel sind so ausgelegt, dass eine Relativbewegung des gekrümmten Elements entlang der beiden Antastpunkte und des Abstandssensors ausgeführt wird. Während dieser Relativbewegung werden mit dem Abstandssensor Abstandwerte ermittelt. Diese Abstandswerte werden rechnerisch mit Weginformation in Bezug gesetzt (korreliert), um so den Profilverlauf zu charakterisieren.

Vorteilhafte Ausgestaltungen des erfindungsgemässen Vorrichtung bilden die Gegenstände der Ansprüche 2 bis 15 und 17 - 19.

ZEICHNUNGEN

Ausführungsbeispiele der Erfindung werden im Folgenden unter Bezugnahme auf die Zeichnungen näher beschrieben. Es zeigen:

FIG. 1      eine schematische Draufsicht auf eine erste Vorrichtung gemäss Erfindung;

FIG. 2A      eine schematische Draufsicht auf eine erste Vorrichtung gemäss Erfindung, wobei beim Durchlaufen eines gekrümmten Elements mehrere Aufnahmen gemacht und einander überlagert wurden;

FIG. 2B      eine schematische Draufsicht eines gekrümmten Elements mit mehreren virtuellen Markierungen am Profilverlauf;

FIG. 2C      einen schematischen Ausschnitt des gekrümmten Elements nach Fig.2B;

FIG. 2D      eine schematische Ausschnittsvergrösserung eines Abschnitts des gekrümmten Elements nach Fig. 2C;

FIG. 2E      eine schematische Ausschnittsvergrösserung eines Abschnitts des gekrümmten Elements nach Fig. 2C;

FIG. 3      eine schematische Ansicht einer zweiten Vorrichtung gemäss Erfindung;

FIG. 4      eine schematische Draufsicht auf einer dritten Vorrichtung gemäss Erfindung;

FIG. 5     eine schematisches Detail einer weiteren Vorrichtung gemäss Erfindung;

FIG. 6     mehrere schematisch überlagerte Ansichten einer weiteren erfindungsgemässen Vorrichtung während dem Abtasten eines gekrümmten Profils;

FIG. 7     eine schematische Draufsicht einer weiteren erfindungsgemässen Vorrichtung während dem Abtasten eines gekrümmten Profils.

DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen sollen. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

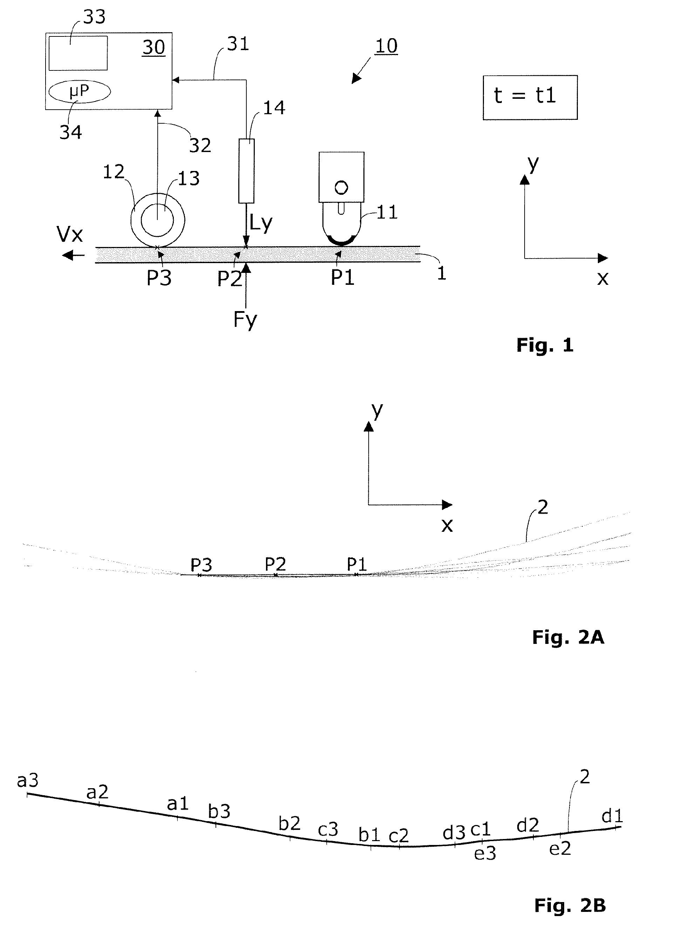

Im Folgenden wird das Prinzip der Erfindung anhand einer vereinfachten Prinzipskizze beschrieben. In Fig. 1 ist eine erste, stark schematisierte Vorrichtung 10 in einer Draufsicht gezeigt.

Die Vorrichtung 10 dient speziell zum Ermitteln des Profilverlaufes eines Biegeteils 1. In Fig. 1 ist ein Biegeteil 1 vor dem Biegen gezeigt. Es handelt sich um ein langes Vierkantprofil 1 dessen Längsachse parallel zur x-Achse verläuft. Das Biegeteil 1 wird durch ein geeignetes Fördermittel in Vx-Richtung transportiert, oder die Vorrichtung 10 wird entlang des Biegeteils 1 bewegt. Das Fördermittel übt auch einen Anpressdruck aus, der in Fig. 1 durch Fy gekennzeichnet ist. Es sind in dem gezeigten Beispiel mindestens zwei mechanisch genau definierte Antastpunkte P1, P3 vorgesehen. In der gezeigten Ausführungsform dienen ein Gleitschuh 11 und eine Präzisionsrolle 12 zur Festlegung der Antastpunkte P1, P3. Ein Drehgeber 13 ist mit der Präzisionsrolle 12 verbunden, wie in Fig. 1 angedeutet. Ein Abstandssensor 14 ist zwischen den beiden Antastpunkten P1, P3 angeordnet. Der Abstandssensor 14 kann auch räumlich in einem anderen festen Bezug zu den Antastpunkten P1, P3 stehen. Durch die Fördermittel wird das Biegeteil 1 nun entlang der beiden Präzisionsrollen 11, 12 und an dem Abstandssensor 14 vorbei gezogen oder die Vorrichtung 10 wird entlang des Biegeteils 1 verlagert.

Da die Antastpunkte P1, P3 und der Abstandssensor 14 in einem festen Bezug zueinander stehen (im konkreten Ausführungsbeispiel ist die Position der Antastpunkte P1, P3 und der Abstand zum Lichtstrahl Ly des Abstandssensors 14 bekannt), können Signale, die vom Drehgeber 13 und vom Abstandssensor 14 geliefert werden geometrisch zueinander in Bezug gesetzt (korreliert) werden. Der Punkt P2, an dem der Abstandsensor 14 den Abstand ermittelt, wird auch als Antastpunkt betrachtet. Die drei Antastpunkte P1, P2, P3 liegen in einer gemeinsamen (Mess-)Ebene (x, y Ebene).

Der Drehgeber 13 sowie der Abstandssensor 14 sind schaltungstechnisch so mit einer Auswerteeinheit 30 verbunden, dass beim Ausführen der Relativbewegung eine Reihe von diskreten Werten aufgenommen werden können, die den Profilverlauf charakterisieren. In Fig. 1 sind die Verbindungen des Drehgebers 13 und des Abstandssensors 14 mit der Auswerteeinheit durch Pfeile 32 und 31 angedeutet. Die entsprechende Verbindung kann durch Kabel, Glasfasern oder auch drahtlos erfolgen. Die Auswerteeinheit 30 kann Speichermittel 33 umfassen, um die diskreten Werte zu speichern und Rechenmittel 34 aufweisen, um die diskreten Werte miteinander zu korrelieren.

Fig. 1 zeigt ein stark vereinfachtes Biegeteil vor dem Biegen, um anhand dieses einfachen Beispiels die Funktion der Vorrichtung 10 erläutern zu können. Es handelt sich, wie bereits erwähnt, um ein langes Vierkantprofil 1.

Es ist offensichtlich, dass in dem gezeigten Beispiel der Abstandssensor 14 stets den gleichen Abstand anzeigt solange das Biegeteil 1 relativ zum Abstandssensor 14 in positiver oder negativer x-Richtung vorbei läuft. Der Einfachheit halber wird ein neues x-y Koordinatensystem mit dem Ursprung in den Antastpunkt P3 gelegt. Dieses neue Koordinatensystem wird mit x1, y1 bezeichnet. Der Abstand in x-Richtung zwischen den Antastpunkten P3 und P2 und zwischen den Antastpunkten P2 und P1 beträgt im gezeigten Beispiel je 50mm. Die Koordinaten des Antastpunkts P3 sind dann x1=0, y1=0, des Antastpunkts P2 sind x1=50mm, y1=variabel (je nach Abstand), des Punkts P1 sind x1=100mm, y1=0.

Der Drehgeber 13 erlaubt es die Umdrehung der Präzisionsrolle 12 in Wegstrecken entlang des Profils 2 des Elements 1 umzusetzen, da die Präzisionsrolle 12 schlupffrei mitläuft. Wenn die Präzisionsrolle 12 zum Beispiel einen Umfang von 500mm hat und sich das Biegeteil 1 um eine Strecke von 50mm in negativer x bewegt, dann dreht sich die Präzisionsrolle 12 um 10% des Umfangs im Uhrzeigersinn, d.h. um 36 Grad.

Bei einer wirklichen Messung kennt man nicht die relative Länge der Wegstrecke, die das Biegeteil 1 in positiver oder negativer x-Richtung zurück legt, sondern es stehen nur die Ausgangssignale des Drehgebers 13 zur Verfügung. Durch Zählen oder anderweitiges Auswerten der Signale des Drehgebers 13 kann man aus einer Winkelinformation die entlang des Profils 2 zurückgelegte Wegstrecke ermitteln. Diese Wegstrecke wird auch als Kurvenlänge bezeichnet.

Der Abstandssensor 14 erlaubt es den Abstand zum Biegeteil 1 in y1-Werte umzusetzen. Der Abstandssensor 14 kann zum Beispiel so eingestellt werden, dass bei dem in Fig. 1 gezeigten Beispiel stets der Wert y1=0 ermittelt wird, da sich der Abstand zwischen Biegeteil 1 und Abstandssensor 13 nicht ändert. D.h. man kann den Referenzabstand so einstellen, dass y1=0 ist wenn das Element 1 keine Krümmung aufweist.

Wichtig ist, dass die y1-Werte, die am Antastpunkt P2 durch den Abstandssensor 13 ermittelt werden mit x1-Werten in Bezug gesetzt werden, die an der Rolle 12 oder mittels einem anderen Wegmesssystem ermittelt werden. Diese mathematische Korrelation geschieht in der Auswerteeinheit 30.

Das Aufnehmen und Auswerten der gemessenen Werte wird im Folgenden näher erläutert. In diesem Zusammenhang wird auf die Figuren 2A bis 2E Bezug genommen.

Da das Profil 2 des Biegeteils 1 stets mechanisch an den Antastpunkten P1 und P3 anliegt, führt das Biegeteil 1 beim Ausführen der Relativbewegung eine Bewegung nicht nur in x-Richtung sondern auch in y-Richtung aus (falls das Biegeteil 1 gekrümmt ist und das Biegeteil 1 an einer feststehenden Vorrichtung 10 vorbei bewegt wird). In Fig. 2A ist die Vorrichtung 10 nur durch die drei Antastpunkte P1, P2, und P3 dargestellt. Das Biegeteil 1, von dem nur das Profil 2 dargestellt ist, wird nun im gezeigten Beispiel in negativer x-Richtung bewegt und stets in y-Richtung gegen die Antastpunkte P1 und P3 gedrückt. In verschiedenen Zeitpunkten wurde die Lage des Profils 2 festgehalten (als Momentaufnahme). Fig. 2A zeigt quasi gleichzeitig in einer Ansicht das Verschieben des Profils 2 in x-Richtung und das Bewegen des Profils in y-Richtung.

In Fig. 2B ist ein Ausschnitt des Profils 2 des Biegeteils 1 gezeigt. Am Profil 2 sind jeweils drei Punkte (Triplets) markiert. Das Profil 2 liegt mit den drei mit a1, a2, a3 markierten Punkten zum Zeitpunkt t=t1 an den Antastpunkten P1, P2, P3 der Vorrichtung 10 an. Kurze Zeit später liegt das Profil 2 mit den drei mit b1, b2, b3 markierten Punkten zum Zeitpunkt t=t2 an den Antastpunkten P1, P2, P3 der Vorrichtung 10 an. Dann folgen die drei mit c1, c2, c3 bezeichneten Punkte, dann die mit d1, d2, d3 bezeichneten Punkte, usw. Um diesen Ablauf besser darstellen zu können, wurden die Punkte bewusst weit auseinander gezogen und auch der Abstand zwischen diesen Triplets relativ gross gewählt.

In jedem Zeitpunkt kann im Antastpunkt P2 der Vorrichtung 10 der Abstand ermittelt werden. Man hat also in jedem Zeitpunkt drei Punkte (Triplet), die allesamt auf dem Profilverlauf 2 des Biegeteils 1 liegen müssen, wie in Fig. 2B angedeutet. Diese Triplets wandern entlang des Profils 2 während sich das Biegeteil 1 bewegt oder während die Vorrichtung 10 entlang des Biegeteils 1 bewegt wird. Würde man nur eine Momentaufnahme (z.B. bei t=t1, wie in Fig. 2B durch die mit a1, a2, a3 bezeichneten Punkte gezeigt) betrachten, dann hätte man lediglich diese drei Punkte des Profilverlaufs 2 zur Hand. Ist der Profiverlauf 2 eine Gerade (siehe Fig. 1), so reichen diese drei Punkte, um die Gerade mathematisch zu definieren.

In der Praxis jedoch geht es um das 2-dimensionale Vermessen des Profilverlaufs 2 eines echten Biegeteils 1 oder eines anderen gekrümmten Elements 1. In diesem Fall werden zahlreiche diskrete Wertepaare ermittelt, die jeweils einer Wegstrecke und einem Abstand entsprechen. Diese Wertepaare könnten in dem in Fig. 2B gezeigten Beispiel wie folgt aussehen: a2: Wegstrecke 19mm, Abstand 0mm; b2: Wegstrecke 72mm, Abstand 1mm; c2: Wegstrecke 101mm, Abstand 2mm; d2: Wegstrecke 138mm, Abstand 0mm, usw.

Ist das Profil 2 eine Kurve oder ein Kurvenzug, so braucht man gemäss Erfindung eine grössere Anzahl von solchen Wertepaaren, um die Kurve oder den Kurvenzug mathematisch anzunähern. Die in Fig. 2B gezeigten Triplets und die in den Punkten a2, b2, c2 und d2 aufgenommenen Wertepaare reichen bei weitem nicht aus, um das Profil 2 genau zu beschreiben.

In einem realen Umfeld wird man die Vorrichtung 10 so einsetzen, dass man eine Punkteschar oder Punktewolke mit vielen diskreten Wertepaaren erhält, die man zum Beispiel verwenden kann, um

- die diskreten Wertepaare in einem Koordinatensystem mathematisch durch einen Kurvenzug anzunähern;
- oder um die gemessenen diskreten Wertepaare mit vorher abgespeicherten diskreten Wertepaaren zu vergleichen.

Durch die Verwendung dreier Antastpunkte, die stets in einem festen räumlichen Bezug zueinander stehen der bekannt ist, wird auf mechanische Art und Weise eine Differentialbildung (dx/dy) ermöglicht bei der eine Verschiebung in x-Richtung mit einer Veränderung in $\gamma$-Richtung korreliert wird.

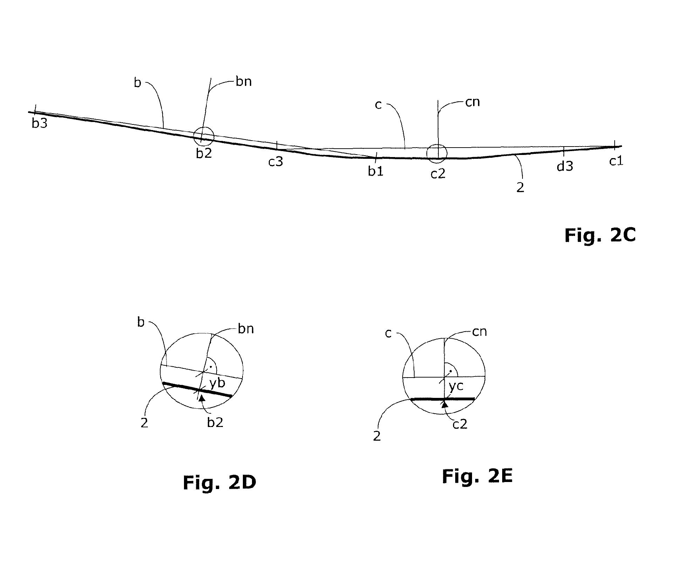

Weitere Details werden nun unter Bezugnahme auf die Figuren 2C, 2D und 2E beschrieben. Fig. 2C zeigt einen vergrösserten Ausschnitt des Profils 2. Es sind in diesem Ausschnitt des Profils 2 nur das Punktetriplet b1, b2, b3 und das Punktetriplet c1, c2, c3 gezeigt. Die beiden äusseren Punkte eines Triplets (z.B. b1 und b3) entsprechen den Antastpunkten P1, P3. Man kann diese beiden Punkte mit einer Geraden verbinden. In den Figuren 2C, 2D und 2E ist die Gerade zwischen b1 und b3 mit b und die Gerade zwischen c1 und c3 mit c bezeichnet. Durch die feststehende Anordnung des Abstandssensors 14 in Bezug auf die Antastpunkte P1 und P3 kann man die Abstandsmessung jeweils durch ein Lot auf diese Geraden b und c darstellen. Das Lot auf der Geraden b wird mit bn und das Lot of der Geraden c mit cn bezeichnet. Das Lot entspricht der Ausbreitungsrichtung des Lichtstrahls Ly falls ein Laser als Teil des Abstandssensors 14 eingesetzt wird. Die Geraden b, c usw. stellen jeweils die momentane Referenzebene dar, die bei der Abstandsmessung vorzugsweise den Wert y1=0 festlegt. Entlang des Lots bn wird der Abstand zur Referenzebene mit yb bezeichnet (siehe Fig. 2D). Entlang des Lots cn wird der Abstand zur Referenzebene mit yc bezeichnet (siehe Fig. 2E).

In einer ersten groben Näherung kann man rechnerisch die Kurve *b3b2* durch eine Gerade annähern deren Länge lb32 über den Satz von Pythagoras wie folgt

berechnet werden kann:

$$lb32 = \sqrt{(b/2)^2 + yb^2}$$

Die Länge lb21 der Kurve $b2b1$ kann wie folgt berechnet werden:

$$lb21 = \sqrt{(b/2)^2 + yb^2}$$

D.h., es gilt mit diesem Ansatz lb21 = lb32 falls das Lot bn mittig zwischen den Antastpunkten P1 und P3 gefällt wird. Analoge Berechnungen können für alle anderen Triplets durchgeführt werden.

Anhand dieser Berechnungen kann anhand der jeweils gemessenen Wertepaare eine angenäherte Steigung dx/dy in verschiedenen Punkten des Profils 2 ermittelt werden. Die angenäherte Steigung im Punkt b3 beträgt zum Beispiel (b/2)/yb. Die angenäherte Steigung im Punkt c3 beträgt zum Beispiel (c/2)/yc. Es ist anzumerken, dass es sich um die Steigung in Bezug auf ein Koordinatensystem handelt, das mit dem Profil 2 fest verbunden ist.

Wird nun der Abstand der Antastpunkte P1, P2, P3 verkleinert, so kann man rein theoretisch in jeden Punkt des Profils 2 durch rechnerisches Auswerten der Wertepaare unmittelbar die Steigung dx/dy ermitteln.

Aus Fig. 2C ist zu erkennen, dass die angenäherte Steigung im Punkt b3 die echte Steigung des Profils 2 relativ gut charakterisiert. Dies liegt daran, dass der Kurvenabschnitt b3b2 nahezu eine Gerade mit konstanter Steigung ist. Im Kurvenabschnitt c3c2 zum Beispiel ist eine solche Näherung nur bedingt tauglich.

Erst ein ineinandergeschachteltes Aneinanderreihen zahlreicher Triplets und die Ermittlung zahlreicher Wertepaare durch eine kontinuierliche Relativbewegung der Vorrichtung 10 in Bezug auf das gekrümmte Element 1 oder des gekrümmten Elements 1 in Bezug auf die Vorrichtung 10 kann man eine sehr hohe Genauigkeit erreichen.

Das Wegmesssystem 13 erlaubt es die Kurvenlänge des Profils 2 zu ermitteln. Im Fall von Fig. 2C misst das Wegmesssystem 13 zum Beispiel die Kurvenlänge von c1 bis b3. Während dieser Wegmessung wird zeitgleich der jeweilige Abstand durch den Abstandssensor 14 ermittelt. Zerlegt man die gemessene Kurvenlänge in viele kleine Abschnitte (die zum Beispiel durch die Winkelauflösung des Drehgebers 13 bestimmt sein kann), so kann man aus der Länge der jeweiligen kleinen Abschnitte und dem dazu gehörenden Abstandswert Punkt für Punkt die Steigung errechnen. Wichtig ist, dass die jeweiligen kleinen Abschnitte und die dazu gehörenden Abstandswerte zu einander in Bezug gesetzt (miteinander korreliert) werden, d.h. es müssen die entsprechenden Werte zu Wertepaaren zusammengefügt werden.

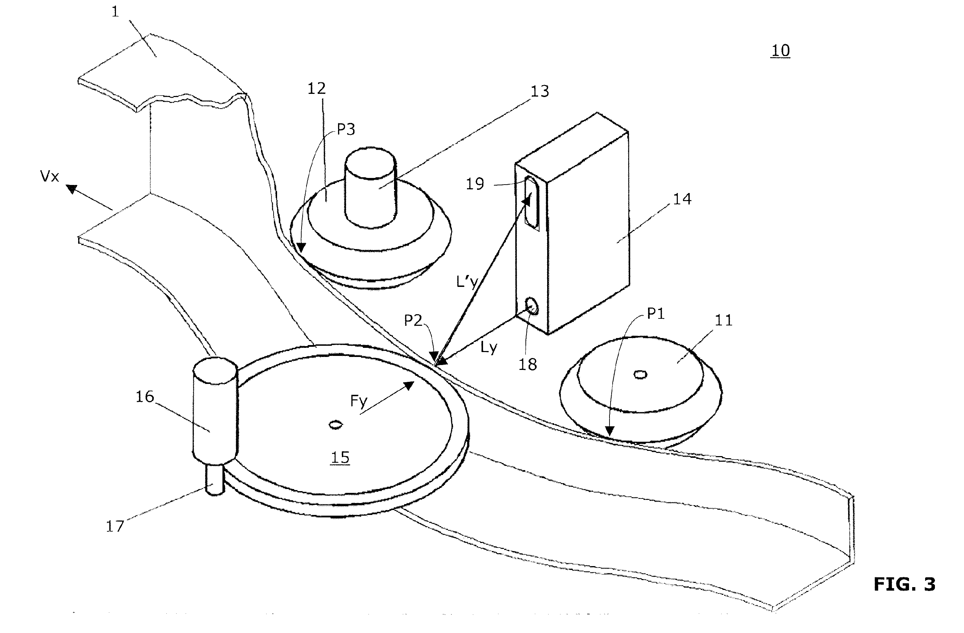

In Fig. 3 ist eine zweite Ausführungsform gezeigt. Im gezeigten Beispiel werden zwei Präzisionsrollen 11, 12 eingesetzt, um zwei der drei Antastpunkte P1, P3 festzulegen. Es ist ein Winkeldekoder 13 vorgesehen, der auf der Achse der Präzisionsrolle 12 sitzt und als Wegmesssystem dient. Ein Laserdetektor 14 definiert den dritter Antastpunkt P2 als ein Punkt, der auf dem emittierten Lichtstrahl Ly liegt. Die Fördereinrichtung umfasst im gezeigten Beispiel eine Antriebsrolle 15, einen Antrieb 16 und eine Antriebswalze 17. Vorzugsweise ist die Antriebsrolle 15 mit einer Beschichtung versehen, um das gekrümmte Element 1 zu bewegen, oder um die Vorrichtung 10 entlang des gekrümmten Elements 1 zu bewegen.

Gemäss Erfindung wird vorzugsweise das Prinzip der LaserTriangulation verwendet, wie anhand der zweiten Ausführungsform in Fig. 3 gezeigt ist. Eine Laserdiode 18 lenkt einen Laserstrahl Ly auf das zu vermessende gekrümmte Element 1. Dabei trifft der Laserstrahl Ly auf das Element 1. Licht L'y, das von dem Element 1 reflektiert wird, wird von einem Detektor 19 erfasst. Durch eine geeignete Auswertung der empfangenen Lichtsignale kann eine Aussage über den momentanen Abstand getroffen werden.

Mittels der Lasertriangulation kann berührungslos der Abstand eines gekrümmten Elements 1 von einer Referenzebene ermittelt werden. Es können aber auch andere Abstandssensoren eingesetzt werden. Besonders geeignet sind Abstandssensoren, die eine Abstandsänderung über einen inkrementalen oder analogen Weggeber (z.B. eine elektronische Messuhr) in eine Abstandsinformation umsetzen.

Es ist aber auch möglich mit einem Hebelelement zu arbeiten, das jede Abstandänderung in eine kleine Drehbewegung (Schwenkbewegung) um einen Fixpunkt umsetzt. Diese Dreh- oder Schwenkbewegung kann dann mittels eines weiteren Drehgebers ausgewertet und rechnerisch oder schaltungstechnisch in Abstandsinformation umgesetzt werden.

Statt der Lasertriangulation kann auch die sogenannte optische Laufzeitmessung eingesetzt werden, um den Abstand berührungslos zu ermitteln.

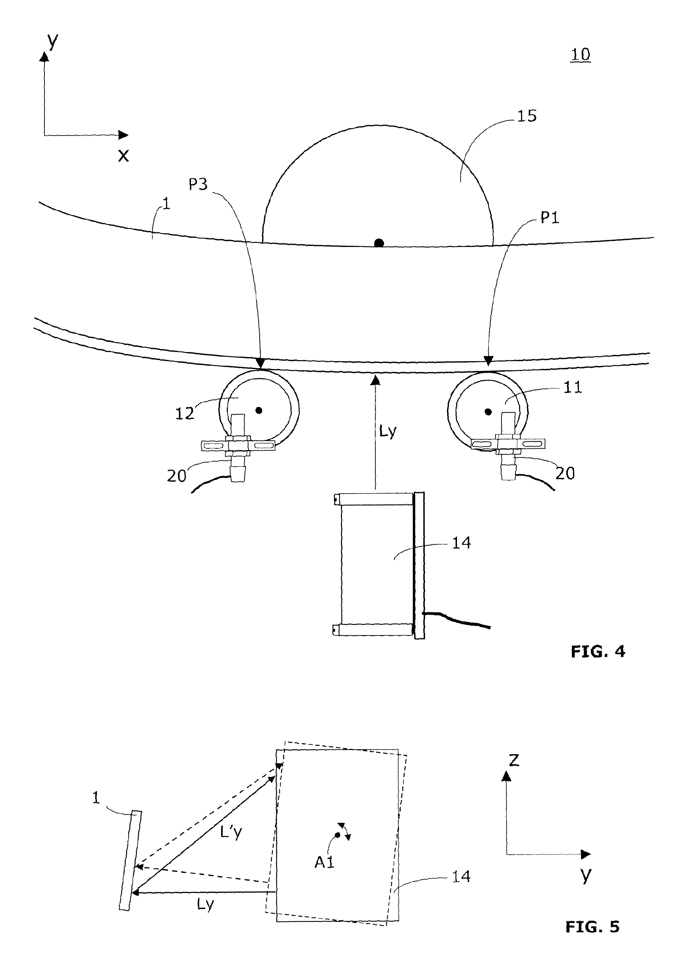

In Fig. 4 ist eine dritte Ausführungsform gezeigt. Im gezeigten Beispiel werden erneut zwei Präzisionsrollen 11, 12 eingesetzt, um zwei der drei Antastpunkte P1, P3 festzulegen. Es ist ein Wegmesssystem vorgesehen, um die zurückgelegte Wegstrecke zu ermitteln. Das Wegmesssystem ist in Fig. 4 nicht gezeigt. Ein Laserdetektor 14 dient als dritter Antastpunkt. Die Fördereinrichtung umfasst im gezeigten Beispiel eine Antriebsrolle 15, die manuell oder automatisch angetrieben wird. Vorzugsweise ist die Antriebsrolle 15 mit einer Beschichtung versehen, um das gekrümmte Element 1 zu bewegen, oder um die Vorrichtung 10 entlang des gekrümmten Elements 1 zu bewegen. Zusätzlich sind ein Anfangs- und ein Endschalter 20 vorgesehen, um die Vorrichtung 10 an und abzuschalten, respektive um die Aufnahme der Wertepaare zu starten und zu beenden.

In einer weiteren Ausführungsform wird ein Laser zusammen mit einem Detektor eingesetzt, um einerseits eine berührungslose Abstandmessung in y-Richtung und andererseits auch eine Profilermittlung in z-Richtung zu ermöglichen. Das Prinzip ist in Fig. 5 angedeutet. Durch ein Kippen des Detektors 14 um eine Achse A1 kann man mit dem Lichtstrahl Ly das Profil 2 des gekrümmten Elements 1 auch in z-Richtung abtasten. Je nach Gestalt des Profils in z-Richtung wird das Licht unterschiedlich zurück reflektiert (Lichtstrahl L'y). Durch geeignete Auswertung kann also auch in der dritten Dimension eine Aussage über den Profilverlauf gemacht werden.

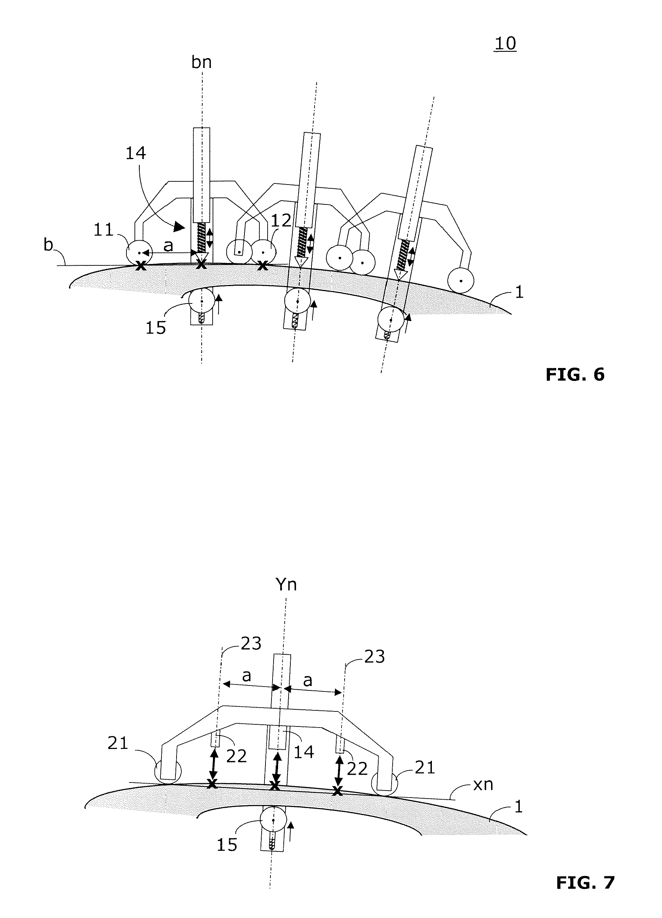

In Fig. 6 ist eine weitere Ausführungsform der Erfindung gezeigt. Um den Messablauf besser verdeutliche zu können wurden drei Momentaufnahmen in einer Draufsicht gezeigt. Die Vorrichtung 10 bewegt sich im Uhrzeigersinn entlang des gekrümmten Elements 1. Die Vorrichtung ist in der Art eines Dreizacks aufgebaut. An den beiden äußeren Armen des Dreizacks sind Präzisionsrollen 11, 12 angebracht. Der mittlere Arm des Dreizacks trägt einen elektromechanischen Abstandssensor 14 , der im Kontaktmodus arbeitet. Der Abstandssensor 14 ist mit einer Druckfeder versehen und kann sich in einer Richtung bewegen (wie durch den Doppelpfeil angedeutet), die in Fig. 6 durch bn bezeichnet wird. Die drei Antastpunkte P1, P2, P3 sind in dieser Figur lediglich durch drei Kreuze auf dem Rand des gekrümmten Elements 1 dargestellt. Die beiden äußeren Antastpunkte, die durch die Rollen 11 und 12 festgelegt sind, können durch eine Gerade b verbunden werden. Die Gerade bn (auch als Lot bezeichnet) steht stets auf dieser Geraden b senkrecht Der Abstand zwischen den äußeren beiden Antastpunkten und der Gerade bn ist bekannt und beträgt bei einem symmetrischen Aufbau 2a. Die Fördereinrichtung ist durch eine Rolle 15 realisiert, die durch eine Feder in einem Langloch beweglich gelagert ist und den notwendigen Anpressdruck (Fy) aufbringt. Nicht gezeigt ist das Wegmesssystem, dass ähnlich wie in den vorher beschriebenen Fällen aussehen kann. Die Signale des Wegmesssystems und des elektromechanischen Abstandssensor 14 werden zueinander in Bezug gesetzt (korreliert), um Aussagen über den Profilverlauf machen zu können.

Bewegt sich die Vorrichtung 10 nun im Uhrzeigersinn nach rechts, so neigt sich die Gerade bn, da der im gezeigten Beispiel abzutastende Profilverlauf konvex ist.

In Fig. 7 ist nun eine Vorrichtung 10 gezeigt bei der alle drei Antastpunkte durch berührungslos arbeitende Abstandssensoren 14 und 22 definiert werden. Der Abstandssensor 14 sendet Licht in einer Richtung aus, die durch Yn bezeichnet wird und die Abstandssensoren 22 senden Licht in Richtungen aus, die durch 23 bezeichnet werden. Der Abstand zwischen 23 und Yn ist bekannt und beträgt im gezeigten Beispiel a. Auch bei diesem Ausführungsbeispiel ist die Fördereinrichtung durch eine Rolle 15 realisiert, die durch eine Feder in einem Langloch beweglich gelagert ist und den notwendigen Anpressdruck (Fy) aufbringt. Außerdem umfasst die Fördereinrichtung zwei als Gegenlager wirkende Rollen 21. Die drei Antastpunkte sind wiederum durch drei Kreuze dargestellt. Diese drei Antastpunkte liegen stets auf den Geraden 23 und Yn, müssen aber nicht notwendigerweise auf einer Geraden xn liegen, welche durch die Berührungspunkte der beiden Rollen 21 vorgegeben sind. Nicht gezeigt ist das Wegmesssystem, dass ähnlich wie in den vorher beschriebenen Fällen aussehen kann. Auch mit dieser Vorrichtung können Angaben über den Profilverlauf ermittelt werden, wobei hier statt Wertepaaren mehrere Abstandsinformationen mit der Weginformation korreliert werden können.

Es sind auch Ausführungsformen denkbar, bei denen zwei berührungslos arbeitende Abstandssensoren und ein mechanisch definierter Antastpunkt vorhanden sind.

Eine erfindungsgemäss Vorrichtung kann auch verwendet werden, um das innere Profil eines Elements 1 zu ermitteln. So kann die Vorrichtung 10 zum Beispiel durch ein gekrümmtes Rohr bewegt werden, um das Innenprofil in der beschriebenen Art und Weise aufzunehmen. Zu diesem Zweck muss aber eventuell die Fördereinrichtung etwas anders ausgeführt werden.

Zahlreiche Vorteile der Erfindung werden unmittelbar aus der Beschreibung klar.

Der Einsatz der erfindungsgemässe Messvorrichtung 10 verkürzt die Nebenzeiten und kann Produktionsabläufe schneller und effizienter machen. Besonders geeignet ist die Vorrichtung 10 um Rohr- und Profilkonturen zu vermessen.

Die Vorrichtung 10 arbeitet schnell, zuverlässig und genau.

**Patentansprüche**

1. Vorrichtung (10) zum Ermitteln des Profilverlaufes (2) eines gekrümmten Elements (1), mit

    - mindestens drei Antastpunkten (P1, P2, P3),
    - einem Wegmesssystem (13), um eine Kurvenlänge zu ermitteln, die entlang des Profilverlaufes (2) verfahren wurde,
    - mindestens einem ersten Abstandssensor (14, 22), der einen der drei Antastpunkte (P2) festlegt, und
    - einem Fördermittel (15, 16, 17; 21), um eine Relativbewegung des gekrümmten Elements (1) entlang der Antastpunkte (P1, P2, P3) auszuführen,

    wobei die Antastpunkte (P1, P2, P3) zu einander in einem bekannten Bezug stehen, und das Wegmesssystem (13) sowie der erste Abstandssensor (14, 22) schaltungstechnisch mit einer Auswerteeinheit (30) verbindbar sind, um beim Ausführen der Relativbewegung eine Reihe von diskreten Werten (a1, a2, a3, b1, b2, b3) aufzunehmen, die den Profilverlauf (2) charakterisieren.

2. Die Vorrichtung (10) nach Anspruch 1, **dadurch gekennzeichnet, dass** mindestens zwei der drei Antastpunkte (P1, P3) mechanische Antastpunkte sind deren Abstand (2a) zueinander bekannt ist und wobei der erste Abstandssensor (14) den Abstand zu dem Profilverlauf (2) entlang einer Geraden (bn, cn; Yn) vermisst, der dritte der zwei Antastpunkte (P2) auf dieser Geraden (bn, cn; Yn) liegt und der Abstand (a) dieser Geraden (bn, cn; Yn) zu den mindestens zwei Antastpunkten (P1, P3) bekannt ist.

3. Die Vorrichtung (10) nach Anspruch 1, **dadurch gekennzeichnet, dass** zusätzlich zu dem ersten Abstandssensor (14) ein zweiter Abstandssensor (22) vorhanden ist und beide Abstandssensoren (14, 22) den Abstand zu dem Profilverlauf (2) entlang parallel zueinander verlaufender Geraden (yn, 23) vermessen, der Abstand (a) zwischen diesen beiden Geraden (yn, 23) und der Abstand (a) zwischen dem dritten der zwei Antastpunkte (P2) und den beiden Geraden (yn, 23) bekannt sind.

4. Die Vorrichtung (10) nach Anspruch 2, **dadurch gekennzeichnet, dass** die mechanischen Antastpunkte (P1, P3) zusammen mit dem durch den ersten Abstandssensor (14) definierten dritten Antastpunkt (P2) drei in einer gemeinsamen Ebene genau definierte Punkte (P1, P2, P3) der Vorrichtung (10) festlegen.

5. Die Vorrichtung (10) nach Anspruch 2 oder 4, **dadurch gekennzeichnet, dass** die mechanischen Antastpunkte (P1, P3) in Form von Präzisionsrollen (11, 12) oder Gleitschuhen (11) ausgeführt sind.

6. Die Vorrichtung (10) nach Anspruch 5, **dadurch gekennzeichnet, dass** das Wegmesssystem (13) einen Drehgeber umfasst, der vorzugsweise mit einer der Präzisionsrollen (12) gekoppelt ist.

7. Die Vorrichtung (10) nach Anspruch 4, **dadurch gekennzeichnet, dass** der durch den ersten Abstandssensor (14) definierte Antastpunkt (P2) in der gemeinsamen Ebene zwischen den beiden Antastpunkten (P1, P3) angeordnet ist.

8. Die Vorrichtung (10) nach einem der vorhergehenden Ansprüche, **dadurch gekennzeichnet, dass** es sich bei dem ersten und/oder zweiten Abstandssensor (14, 22) um einen berührungslos arbeitenden Abstandssensor (14, 22) handelt.

9. Die Vorrichtung (10) nach Anspruch 8, **dadurch gekennzeichnet, dass** ein Laser (18) zusammen mit einem Detektor (19) als berührungslos arbeitender Abstandssensor (14, 22) dienen, wobei der Laser (18) mit dem Detektor (19) so angeordnet sind, dass eine Abstandsmessung nach dem Triangulationsprinzip ausführbar ist.

10. Die Vorrichtung (10) nach einem der Ansprüche 1 oder 2, **dadurch gekennzeichnet, dass** das Fördermittel eine angetriebene Rolle (15) umfasst, die einerseits die Relativbewegung erzeugt und andererseits einen Anpressdruck (Fy) ausübt, um das gekrümmten Element (1) gegen die Antastpunkte (P1, P3) oder die Antastpunkte (P1, P3) gegen das gekrümmten Element (1) zu pressen.

11. Die Vorrichtung (10) nach einem der Ansprüche 1 oder 2, **dadurch gekennzeichnet, dass** jeder der Antastpunkte (P1, P2, P3) je einen Punkt (a1, a2, a3) des Profilverlaufs (2) definieren, wobei diese Punkte (a1, a2, a3) in einer gemeinsamen Messebene (x, y) liegen.

12. Die Vorrichtung (10) nach Anspruch 11, **dadurch gekennzeichnet, dass** ein Bewegungsvektor (Vx), der die Richtung der Relativbewegung beschreibt, in der selben Messebene (x, y) liegt.

13. Die Vorrichtung (10) nach Anspruch 11, **dadurch gekennzeichnet, dass** die Auswerteeinheit (30) Speichermittel (33) umfasst, um die diskreten Werte (a1, a2, a3, b1, b2, b3) zu speichern und Rechenmittel (34) aufweist, um die diskreten Werte (a1, a2, a3, b1, b2, b3) miteinander zu korrelieren.

14. Die Vorrichtung (10) nach Anspruch 11, **dadurch gekennzeichnet, dass** die Auswerteeinheit (30) Rechenmittel (34) aufweist, um die diskreten Werte (a1, a2, a3, b1, b2, b3) in einem Koordinatensystem mathematisch durch einen Kurvenzug anzunähern.

15. Die Vorrichtung (10) nach Anspruch 9, **dadurch gekennzeichnet, dass** der Laser (18) um eine Achse (A1) schwenkbar ist, die parallel zu einem Bewegungsvektor (Vy) der die Richtung der Relativbewegung beschreibt, verläuft, wobei durch ein Schwenken des Lasers (18) um die Achse (A1) eine Abtastung des Profils des gekrümmten Elements (1) in einer weiteren Dimension (z) ermöglicht.

16. Verfahren zum Ermitteln des Profilverlaufes (2) eines gekrümmten Elements (1), mit den folgenden Schritten:

   - Erzeugen eines Anpressdrucks (Fy) zwischen einer Messvorrichtung (10) und dem gekrümmten Element (1), wobei die Messvorrichtung (10) drei Antastpunkte (P1, P2, P3) definiert, die in einem bekannten Bezug zueinander stehen und die einen Abstandssensor (14) sowie ein Wegmesssystem (13) umfasst, wobei der dritte Antastpunkt (P2) durch einen Abstandssensor (14) definiert ist,

- Erzeugen einer Relativbewegung (Vx) entlang des Profilverlaufes (2) des gekrümmten Elements (1), wobei sich die Antastpunkte (P1, P2, P3) entlang des Profilverlaufes (2) verlagern,

- Erfassen von diskreten Werten (a1, a2, a3, b1, b2, b3), die Abstandsinformation zwischen dem gekrümmten Element (1) und dem Abstandssensor (14) entsprechen,

- Erfassen einer Weglänge, die entlang des Profilverlaufes (2) verfahren wurde,

- Korrelieren der Weglänge und der diskreten Werte (a1, a2, a3, b1, b2, b3) der Abstandsinformation, um den Profilverlauf (2) zu charakterisieren.

**17.** Das Verfahren nach Anspruch 16, wobei zwei der drei Abtastpunkte (P1, P2, P3) mechanische Abtastpunkte (P1, P3) sind.

**18.** Das Verfahren nach Anspruch 16 oder 17, wobei das Wegmesssystem (13) einen Drehgeber umfasst und die Weglänge aus Signalen des Drehgebers ermittelt wird.

**19.** Das Verfahren nach Anspruch 18, wobei die diskreten Werte (a1, a2, a3, b1, b2, b3) und die Abstandsinformation gespeichert werden bevor die Korrelation ausgeführt wird.

**Fig. 1**

$t = t1$

**Fig. 2A**

**Fig. 2B**

**Fig. 2C**

**Fig. 2D**

**Fig. 2E**

FIG. 3

EP 1 762 820 A1

10

y

x

15

P3

1

P1

12

11

20

Ly

20

14

**FIG. 4**

1

L'y

Ly

14

z

A1

y

**FIG. 5**

<u>10</u>

FIG. 6

FIG. 7

**Europäisches Patentamt**

**EUROPÄISCHER RECHERCHENBERICHT**

Nummer der Anmeldung

EP 05 10 8231

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 573 131 A (CORBIN ET AL) 25. Februar 1986 (1986-02-25)<br><br>* Spalte 2, Zeile 50 - Spalte 3, Zeile 52 *<br>* Spalte 5, Zeile 4 - Spalte 10, Zeile 48 *<br>* Abbildungen 1,2,4,6A,9 *<br>----- | 1-9, 11-14, 16-19 | G01B11/24 |
| X | US 4 914 828 A (FIEDOR ET AL) 10. April 1990 (1990-04-10)<br><br>* Spalte 1, Zeile 5 - Zeile 21 *<br>* Spalte 2, Zeile 36 - Spalte 6, Zeile 60 *<br>* Abbildungen 1-4 *<br>----- | 1,2,4-9, 11-14, 16-19 | |
| X | US 5 535 143 A (FACE ET AL) 9. Juli 1996 (1996-07-09)<br><br>* Spalte 2, Zeile 3 - Spalte 4, Zeile 37 *<br>* Spalte 5, Zeile 12 - Spalte 11, Zeile 21 *<br>* Abbildungen 1-4 *<br>----- | 1,2,4-9, 11-14, 16-19 | RECHERCHIERTE SACHGEBIETE (IPC)<br><br>G01B<br>G01C<br>E01C |
| X | US 4 084 324 A (WHITEHOUSE ET AL) 18. April 1978 (1978-04-18)<br><br>* Spalte 2, Zeile 3 - Zeile 65 *<br>* Spalte 7, Zeile 11 - Spalte 11, Zeile 17 *<br>* Abbildungen 1-8,12 *<br>-----<br><br>-/-- | 1-7, 11-14, 16-19 | |

Der vorliegende Recherchenbericht wurde für alle Patentansprüche erstellt

| Recherchenort | Abschlußdatum der Recherche | Prüfer |
|---|---|---|
| München | 13. Januar 2006 | Petelski, T |

EPO FORM 1503 03.82 (P04C03)

**Europäisches Patentamt**

## EUROPÄISCHER RECHERCHENBERICHT

Nummer der Anmeldung

EP 05 10 8231

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 698 689 A (UNIMETAL STE FSE ACIERS LONGS) 3. Juni 1994 (1994-06-03)<br><br>* Seite 2, Zeile 1 - Zeile 21 *<br>* Seite 3, Zeile 8 - Seite 7, Zeile 32 *<br>* Seite 9, Zeile 32 - Seite 10, Zeile 15 *<br>* Abbildungen 1-3 *<br>----- | 1-9, 11-14, 16-18 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 13. Januar 2006 | Petelski, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 10 8231

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2006

| Im Recherchenbericht angeführtes Patentdokument | Datum der Veröffentlichung | Mitglied(er) der Patentfamilie | Datum der Veröffentlichung |
|---|---|---|---|
| US 4573131 A | 25-02-1986 | KEINE | |
| US 4914828 A | 10-04-1990 | KEINE | |
| US 5535143 A | 09-07-1996 | KEINE | |
| US 4084324 A | 18-04-1978 | DE 2617707 A1<br>JP 51149052 A | 04-11-1976<br>21-12-1976 |
| FR 2698689 A | 03-06-1994 | KEINE | |

EPO FORM P0461

Für nähere Einzelheiten zu diesem Anhang : siehe Amtsblatt des Europäischen Patentamts, Nr.12/82